# EUROPÄISCHE PATENTSCHRIFT

(11) **EP 1 954 845 B1**
(45) Veröffentlichungstag und Bekanntmachung des Hinweises auf die Patenterteilung: **29.07.2009**
(21) Anmeldenummer: 05818333.6
(22) Anmeldetag: 02.12.2005
(51) Int. Cl.: C22C 38/00

(54) **VERFAHREN ZUM HERSTELLEN VON STAHL MIT HOHEM MANGAN- UND NIEDRIGEM KOHLENSTOFFGEHALT**
METHOD FOR PRODUCING HIGH-MANGANESE, LOW-CARBON STEEL
PROCEDE POUR PRODUIRE DE L'ACIER A TENEUR ELEVEE EN MANGANESE ET A TENEUR FAIBLE EN CARBONE

(43) Veröffentlichungstag der Anmeldung: 13.08.2008
(73) Patentinhaber: SMS Siemag AG, 40237 Düsseldorf (DE)
(72) Erfinder: ROSE, Lutz, 47259 Duisburg (DE); WEISCHEDEL, Walter, 40670 Meerbusch (DE)
(74) Vertreter: Klüppel, Walter
(86) Internationale Anmeldenummer: PCT/EP2005/012954
(87) Internationale Veröffentlichungsnummer: WO 2007/062680

(56) Entgegenhaltungen:
- EP-A- 0 652 296
- US-A- 4 808 220
- GIGACHER ET AL: BHM, Bd. 148, Nr. 11, 2003, Seiten 460-465, XP009063529 in der Anmeldung erwähnt
- PATENT ABSTRACTS OF JAPAN Bd. 014, Nr. 431 (C-0759), 17. September 1990 (1990-09-17) & JP 02 166256 A (KAWASAKI STEEL CORP; others: 01), 26. Juni 1990 (1990-06-26)

## Beschreibung

Die Erfindung betrifft ein Verfahren und eine Schmelzanlage zum Herstellen von Stahl mit hohem Mangan- und niedrigem Kohlenstoffgehalt auf der Basis von flüssigem Roheisen oder flüssigem Stahl und Schlackenbildnem.

Die Herstellung von hoch manganhaltigem Stahl wird in Hüttenwerken überwiegend auf der Basis von Schrott im Lichtbogenofen durchgeführt (Vortrag am Forum für Metallurgie, Leoben, 2003, Verfasser Gigacher, Doppler, Bemard Krieger, veröffentlicht in BHM, Bd. 148, Nr. 11, 2003, Seiten 460-465, XP009063529). Bei der Herstellung werden Mangan-Träger als Ferrolegierung in die Schmelze gegeben. Dadurch entsteht das Problem, dass Ferromangan (FeMn) mit einem niedrigen Kohlenstoffgehalt um das ca. 300fache teurer ist als das gleiche Produkt mit einem hohen C-Gehalt. FeMn mit niedrigem Kohlenstoffgehalt ist jedoch für die Herstellung am besten geeignet.

Eine Herstellung von hoch manganhaltigem Stahl in einem anderen Gefäß als einem Elektrolichtbogenofen scheitert daran, dass durch das Blasen von Sauerstoff eine sehr große Menge von Mangan verschlackt, da beim Entkohlen des Stahls der Sauerstoff eine höhere Affinität zu Mangan entwickelt. Bisher bei der Wahl der Konverterroute auftretende Nachteile liegen in einem hohen Verschlacken des Mangans und einem entsprechend niedrigen Mangangehalt im Stahl von ca. 16 - 17%.

Die Herstellung von Stahl mit hohem Mangan- und niedrigem Kohlenstoffgehalt im Elektrolichtbogenofen ist mit mehreren Nachteilen verbunden: Im Lichtbogenbereich findet bei Temperaturen bis 3000 °C eine hohe Verdampfung des Mangans statt. Es ist hochwertiger, also teurer Schrott erforderlich, um niedrige Gehalte von Begleitelementen zu gewährleisten. Außerdem ist der Einsatz von teuren Ferrolegierungen mit niedrigem Kohlenstoffgehalt notwendig.

Der Erfindung liegt die Aufgabe zugrunde, die bisherigen Nachteile der Prozessroute in anderen Gefäßen als Elektrolichtbogenöfen zu vermeiden, wobei bei Einsatz von Roheisen und flüssiger FeMn-Charge hoch manganhaltiger Stahl bei niedrigstem Kohlenstoffgehalt erzielt werden soll.

Die gestellte Aufgabe wird erfindungsgemäß dadurch gelöst, dass der Prozess durch Einbringen von flüssigem Ferromangan mit 6% C und flüssigem Stahl mit 0,1 % C in einen FeMn-Raffinationskonverter und einer benötigten Menge von Schlackenbildnern eingeleitet wird, dass über kombiniertes Blasen von Sauerstoff durch Toplanzen und Unterbaddüsen der Kohlenstoff-Anteil auf 0,7 - 0,8 % gesenkt wird, wonach ein Anteil des kalten Endprodukts aus einer Vorschmelze als Kühlmittel eingegeben wird und wonach durch kontinuierliches Einblasen von Sauerstoff durch die Unterbaddüsen der Kohlenstoff-Anteil bis auf 0,05 - 0,1 % C gesenkt wird. Die Wirkung der Kühlmittel und der Ablauf des Verbrennungsprozesses des Kohlenstoffs bei relativ niedrigen Temperaturen und unterhalb des Badspiegels verhindert die Verdampfung des Mangans. Der Einsatz von FeMn carbure als Manganträger gewährleistet eine preiswerte Route zur Herstellung von hoch manganhaltigem Stahl. Der Mangangehalt kann auf 25 - 30% gesteigert werden. Der Einsatz von Roheisen erleichtert die Einhaltung der strengen Anforderungen an Anteile von Kupfer und anderen Begleitelementen. Die Herstellung von hoch manganhaltigem Stahl mit Zusätzen wird auch in einem integrierten Stahlwerk möglich. Die Zugabe von Trampelementen aus Schrott, der bspw. Kupfer, Zink, Zinn, Molybdän, Wolfram o. dgl. enthält, ist nicht erforderlich.

Vorteilhaft ist außerdem, dass mit dem kombinierten Blasen von Sauerstoff und Sauerstoff-Inertgasmischung durch die Toplanze bzw. über die Unterbaddüsen der Partialdruck erniedrigt wird.

Zur Einhaltung einer vorteilhaften niedrigen Temperatur ist vorgesehen, dass alle Schritte des Prozesses in einem Temperaturbereich zwischen 1630 - 1650 °C durchgeführt werden.

Eine weitere Verbesserung des Verfahrens sieht vor, dass zur Einstellung der Analyse in einem Pfannenofen SiMn und / oder FeAI in die Schmelze gegeben werden.

Damit können Stähle , wie bspw. TWIP- (Twinning Induced Plasticity ) oder TRIP-Stähle (Transformation Induced Plasticity) erzeugt werden.

Ein praktisches Ausführungsbeispiel ist dahingehend gestaltet, dass in einen FeMn-Raffinationskonverter flüssiges FeMn75 carbure in einer Menge von ca. 380 kg mit 6 % C (pro Tonne Stahl) und 530 kg flüssiger Stahl mit 0,1 % C und die benötigte Menge Schlackenbildner zugegeben wird, wodurch die Schmelze 23,3 kg Kohlenstoff erhält, die einem Kohlenstoffgehalt von C = 2,6 % C entsprechen, dass der Kohlenstoffgehalt durch kombiniertes Sauerstoffblasen über zumindest eine Toplanze und mehrere Unterbaddüsen auf ca. 0,9 % C abgesenkt wird, und dass anschließend ca. 150 kg des kalten Endprodukts aus einer Vorschmelze kontinuierlich als Kühlmittel zugegeben und über die Unterbaddüsen durch eine Sauerstoff-Inertgasmischung der Kohlenstoffgehalt auf ca. 0,05 - 0,1 % C abgesenkt wird.

Die Schmelzanlage zum Herstellen von Stahl mit hohen Mangan- und niedrigen Kohlenstoff-Anteilen, mit einer Roheisen- oder Kohlenstoffstahl-Versorgung mit einer Zugabe von Schlackenbildnern und Begleitelementen, ist dahingehend gestaltet, dass im Stöfffluss einerseits ein SAF-Schmelzgefäß oder ein Hoch-ofen und andererseits ein Stahlwerkskonverter für Kohlenstoffstahl oder ein Elektrolichtbogenofen einem FeMn-Raffinationskonverter vorgeordnet sind, an den sich im Prozessweg ein Pfannenofen anschließt. In der Zeichnung sind Ausführungsbeispiele der Erfindung dargestellt, die nachstehend näher erläutert werden.

### Es zeigen:

- Fig. 1: ein Diagramm für den Chargiervorgang (oberer Teil) und den Verlauf des Entkohlungsprozesses in Abhängigkeit der Zeit (unterer Teil) und
- Fig. 2: eine Blockdarstellung mit der Routine der zugeführten Rohstoffe in einer Schmelzanlage.

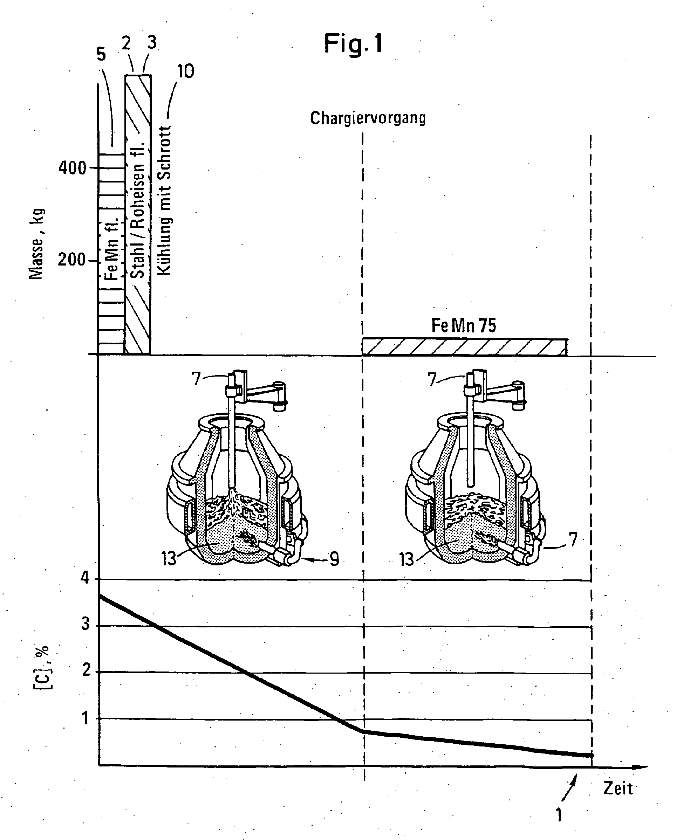

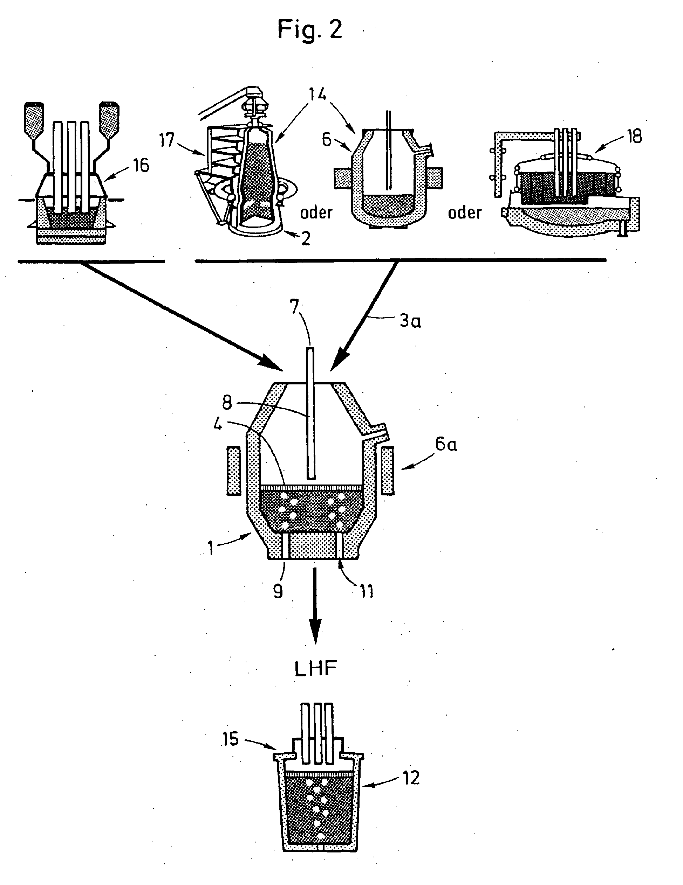

Gemäß Fig. 1 arbeitet ein Verfahren zum Herstellen von Stahl 1 mit hohen Mangan- und niedrigen Kohlenstoff-Gehalten auf der Basis von flüssigem Roheisen 2 oder flüssigem Stahl 3 und Schlackenbildnern 4 (vgl. in Fig. 2 die dortige Schlackenschicht). Der Prozess wird eingeleitet durch Einbringen von flüssigem Ferromangan 5 mit etwa 6% C und flüssigem Stahl bzw. Kohlenstoffstahl 3a mit ca. 0,1 % C in einen FeMn-Raffinationskonverter 6a mit einer benötigten Menge von Schlackenbildnern 4. Danach wird über ein kombiniertes Blasen von Sauerstoff 7 durch zumindest eine Toplanze 8 und Unterbaddüsen 9 der Kohlenstoff-Anteil auf ca. 0,7 bis 0,8 % C gesenkt. Gleichzeitig wird ein Anteil des kalten Endprodukts aus einer Vorschmelze als Kühlmittel 10 eingegeben. In dieser Phase erfolgt ein Absenken des Kohlenstoff-Anteils bis auf ca. 0,05 - 0,1 % C durch kontinuierliches Einblasen von Sauerstoff 7 durch die Unterbaddüsen 9.

Mit dem kontinuierlichen Blasen von Sauerstoff 7 und einer Sauerstoff- Inertgasmischung 11 durch die Unterbaddüsen 9 und durch die Toplanze 8 kann der Partialdruck des Sauerstoffs in der Schmelze erniedrigt werden. Alle Schritte des Prozesses finden in einem (niedrigen) Temperaturbereich zwischen 1630 °C und 1650 °C statt.

Zur Einstellung der Analyse in einem Pfannenofen 12 werden SiMn und / oder FeAI in die Schmelze 13 eingegeben.

Die Schmelzanlage zum Herstellen von Stahl 1 mit hohen Mangan- und niedrigen Kohlenstoff-Gehalten arbeitet gemäß Fig. 2 mit einer Roheisen - oder Kohlenstoffstahl-Versorgung 14 unter Zugabe von Schlackenbildnern 4 und Begleitelementen 15 des Stahls. Dazu dient ein Reduktionsofen 16 (mit eingetauchten Elektroden) oder ein Hochofen 17 für das Roheisen 2 oder ein Stahlwerkskonverter 6 für Kohlenstoffstahl 3a oder ein Elektrolichtbogenofen 18, die im Stofffluss einem FeMn-Raffinationskonverter 6a vorgeordnet sind. An den FeMn-Raffinationskon-verter 6a schließt sich der Pfannenofen 12 an.

Ein praktisches Ausführungsbeispiel für das erfindungsgemäß Verfahren ist derart gestaltet, dass in einem ersten Schritt in den FeMn-Raffinationskonverter 6a flüssiges FeMn75 carbure in einer Menge von ca. 380 kg mit 6% C (pro Tonne Stahl) und 530 kg flüssiger Stahl mit 0,1 % C und die benötigte Menge Schlackenbildner 4 zugegeben wird, wodurch die Schmelze (13) 23,3 kg Kohlenstoff erhält, die einem Kohlenstoffgehalt von C = 2,6 % entsprechen. In einem zweiten Schritt wird der Kohlenstoffgehalt durch kombiniertes Sauerstoff-blasen über zumindest eine Toplanze 8 und mehrere Unterbaddüsen 9 auf ca. 0,7 % abgesenkt wird. In einem dritten Schritt werden ca. 150 kg (auf eine Tonne Stahl) des kalten Endprodukts aus einer Vorschmelze kontinuierlich als Kühlmittel 10 zugegeben. Als vierter Schritt wird über die Unterbaddüsen 9 eine Sauerstoff-Inertgas-Mischung 11 (das Inertgas dient zum Schutz der Düsen und übt gleichzeitig eine Rührwirkung aus) der Kohlenstoffgehalt auf ca. 0,1% C abgesenkt.

Die Einstellung der Analyse (TWIP- oder TRIP-Stähle) erfolgt über eine Zugabe von Leichtmetallen (Si, Al u. dgl.), so dass der anzustrebende hoch manganhaltige Stahl 1 mit niedrigem Kohlenstoffgehalt und Zusätzen Al und Si auch in einem integrierten Stahlwerk erzeugt werden kann.

### Bezugszeichenliste

- 1: Stahl mit hohem Mangan- und niedrigem C-Gehalt
- 2: flüssiges Roheisen
- 3: flüssiger Stahl
- 3a: flüssiger Kohlenstoffstahl
- 4: Schlackenbildner
- 5: flüssiges Ferromangan
- 6: Stahlwerkskonverter
- 6a: FeMn-Raffinationskonverter
- 7: Sauerstoff
- 8: Toplanze
- 9: Unterbaddüsen
- 10: Kühlmittel
- 11: Sauerstoff-Inertgasmischung
- 12: Pfannenofen
- 13: Schmelze
- 14: Roheisen- oder Kohlenstoffstahl-Versorgung
- 15: Begleitelemente
- 16: Reduktionsofen (SAF)
- 17: Hochofen
- 18: Elektrolichtbogenofen

## Patentansprüche

1. Verfahren zum Herstellen von Stahl mit hohem Mangan-Gehalt von 25-30 % und niedrigem Kohienstoff-Gehalt auf der Basis von flüssigem Roheisen oder flüssigem Stahl und Schlackenbildnern,
**dadurch gekennzeichnet, dass** der Prozess durch Einbringen von flüssigem Ferromangan mit 6 % C und flüssigem Stahl mit 0,1 % C oder flüssigem Roheisen in einen FeMn Raffinationskonverter und einer benötigten Menge von Schlackenbildnern eingeleitet wird, dass über kombiniertes Blasen von Sauerstoff durch Toplanzen und Unterbaddüsen der KohlenstoffAnteil auf 0,7 - 0,8 % gesenkt wird, wonach ein Anteil des kalten Endprodukts aus einer Vorschmelze als Kühlmittel eingegeben wird und wonach durch kontinuierliches Einblasen von Sauerstoff durch die Unterbaddüsen der Kohlenstoff-Anteil bis auf 0,05 - 0,1 % C gesenkt wird.

2. Verfahren nach Anspruch 1 , **dadurch gekennzeichnet, dass** mit dem kombinierten Blasen von Sauerstoff und einer Sauerstoff-Inertgasmischung durch die Toplanze bzw. über die Unterbaddüsen der Partialdruck erniedrigt wird.

3. Verfahren nach den Ansprüchen 1 und 2, **dadurch gekennzeichnet, dass** alle Schritte des Prozesses in einem Temperaturbereich zwischen 1630 -1650 C durchgeführt werden.

4. Verfahren nach den Ansprüchen 1 bis 3, **dadurch gekennzeichnet, dass** zur Einstellung der Analyse in einem Pfannenofen SiMn und / oder FeAl in die Schmelze gegeben werden.

5. Verfahren nach einem der Ansprüche 1 bis 4, **dadurch gekennzeichnet, dass** in einen FeMn-Raffinationskonverter flüssiges FeMn75 carbure in einer Menge von 380 kg mit 6% C (pro Tonne Stahl) und 530 kg flüssiger Stahl mit 0,1 % C und die benötigte Menge Schlackenbildner zugegeben wird, wodurch die Schmelze 23,3 kg Kohlenstoff erhält, die einem Kohlenstoffgehalt von C = 2,6% entsprechen, dass der Kohlenstoffgehalt durch kombiniertes Sauerstoffblasen über zumindest eine Toplanze und mehrere Unterbaddüsen auf C = 0,7 % abgesenkt wird, und dass anschliessend 150 kg des kalten Endprodukts aus einer Vorschmelze kontinuierlich als Kühlmittel zugegeben und über die Unterbaddüsen (9) durch eine Sauerstoff-Inertgasmischung der Kohlenstoffgehalt auf ca. C = 0,1 % abgesenkt wird.

## Claims

1. Method of producing steel with high manganese content of 25 to 30% and low carbon content on the basis of liquid pig iron or liquid steel and slag-forming agents, **characterised in that** the process is initiated by introducing liquid ferro-manganese with 6% of carbon and liquid steel with 0.1% of carbon or liquid pig iron into an FeMn refining converter and a required amount of slag-forming agents, that the carbon component is reduced to 0.7 to 0.8% by combined blowing of oxygen by top lances and underbath nozzles, after which a proportion of the cold end product from a premelt is added as coolant and after which the carbon component is reduced to 0.05 to 0.1% of carbon by continuous blowing in of oxygen through the underbath nozzles.

2. Method according to claim 1, **characterised in that** the partial pressure is reduced by the combined blowing of oxygen and a mixture of oxygen and inert gas through the top lance or through the underbath nozzles.

3. Method according to claims 1 and 2, **characterised in that** all steps of the process are carried in temperature range between 1630 and 1650° C.

4. Method according to any one of claims 1 to 3, **characterised in that** SiMn and/or FeAl is or are added to the melt in a ladle furnace for setting the analysis.

5. Method according to any one of claims 1 to 4, **characterised in that** liquid FeMn75 carburiser is added in an amount of 380 kg with 6% carbon (per tonne of steel) and 530 kg of liquid steel with 0.1% of carbon and the required amount of slag-forming agents are added to an FeMn refining converter, whereby the melt has 23.3 kg of carbon, which corresponds with a carbon content of C = 2.6%, that the carbon content is reduced by combined oxygen blowing via at least one top lance and several underbath nozzles to C = 0.7% and that subsequently 150 kg of the cold end product from a premelt are continuously added as coolant and the carbon content is reduced to approximately C = 0.1 % by a mixture of oxygen and inert gas via the underbath nozzles (9).

## Revendications

1. Procédé de production d'acier à teneur élevée en manganèse de 25 à 30 % et à teneur faible en carbone, à base de fer liquide de première fusion ou d'acier liquide et d'agents formateurs de scories,
**caractérisé en ce que** le processus est initié par l'introduction de ferromanganèse liquide avec 6 % de C et d'acier liquide avec 0,1 % de C ou de fer liquide de première fusion dans un convertisseur d'affinage de type FeMn et d'une quantité requise d'agents formateurs de scories, la teneur en carbone est réduite à 0,7 à 0,8 % par insufflation combinée d'oxygène à travers des lances déployées par le haut et à travers des buses de fond de bain, pour ensuite ajouter une partie du produit fini froid, qui est issu d'un processus de fusion réalisé en amont, en tant qu'agent de refroidissement, et enfin réduire la teneur en carbone à 0,05 à 0,1 % de C par insufflation d'oxygène à travers les buses de fond de bain.

2. Procédé selon la revendication 1, **caractérisé en ce que** ladite insufflation combinée d'oxygène et d'un mélange de gaz inerte et d'oxygène à travers ladite lance déployée par le haut et/ou à travers lesdites buses de fond de bain entraîne une baisse de la ou pression partielle.

3. Procédé selon les revendications 1 et 2, **caractérisé en ce que** l'ensemble des étapes du processus est réalisé dans une gamme de températures comprise entre 1630 et 1650 C.

4. Procédé selon les revendications 1 à 3, **caractérisé en ce que** du SiMn et / ou du FeAl est/sont ajouté(s) à la fonte dans un four à poche afin d'ajuster la composition.

5. Procédé selon l'une des revendications 1 à 4, **caractérisé en ce qu'**on ajoute, dans un convertisseur d'affinage de type FeMn, du FeMn75 carbure liquide dans une quantité de 380 kg avec 6 % de C (par tonne d'acier) et 530 kg d'acier liquide avec 0,1 % de C ainsi que la quantité requise d'agents formateurs de scories, faisant ainsi en sorte que la fonte reçoive 23,3 kg de carbone soit une teneur en carbone de C = 2,6 %, que la teneur en carbone est réduite à C = 0,7 % par insufflation combinée d'oxygène à travers au moins une lance déployée par le haut et plusieurs buses de fond de bain, et qu'on ajoute ensuite, en tant qu'agent de refroidissement, 150 kg du produit fini froid issu d'un processus de fusion réalisé en amont et qu'on réduit la teneur en carbone à C = 0,1 % par insufflation d'un mélange de gaz inerte et d'oxygène à travers les buses de fond de bain (9).
